# EUROPÄISCHE PATENTANMELDUNG

(11) **EP 4 468 546 A1**
(43) Veröffentlichungstag der Anmeldung: **27.11.2024**
(21) Anmeldenummer: 23174458.2
(22) Anmeldetag: 22.05.2023
(51) Int. Cl.: H02J 3/14, G06Q 20/14, G06Q 50/06, H04L 9/00

(54) **VERFAHREN UND SYSTEM ZUM LASTAUSGLEICH IN EINEM ENERGIEVERSORGUNGSNETZ**

(71) Anmelder: Youki GmbH, 92224 Amberg (DE)
(72) Erfinder: Stoussavljewitsch, Michael, c/o YOUKI GmbH 92224 Amberg (DE); Stoussavljewitsch, Martin, c/o YOUKI GmbH 92224 Amberg (DE); Rentsch, Tobias, c/o YOUKI GmbH 92224 Amberg (DE)
(74) Vertreter: Wolf, Gerhard

(57) **Zusammenfassung**

Die Erfindung bezieht sich auf ein computerbasiertes Verfahren zum Lastausgleich in einem Energieversorgungsnetz basierend auf einer rechnerbasierten Lastmanagement-Einheit (11) und mehreren Teilnehmern (13), wobei der Energieverbrauch der Teilnehmer (13) mittels Smart-Meter (1) erfasst wird und ein oder mehrere Smart-Meter (1) jeweils einem Smart-Meter-Gateway (2) zugeordnet sind.

## Beschreibung

Die Erfindung betrifft ein Verfahren sowie ein System zum Lastausgleich in einem Energieversorgungsnetz mittels einer Blockchain-basierten Lastmanagement-Plattform.

Die Anzahl von dezentralen, stromerzeugenden Anlagen, insbesondere Photovoltaikanlagen, Windkraftwerken etc. sowie elektrischen Verbrauchern mit einer hohen elektrischen Leistung (beispielsweise Wärmepumpen, Ladestationen für Elektrofahrzeuge etc.) ist in der jüngeren Vergangenheit stark gestiegen. Der Energieverbrauch derartiger elektrischer Verbraucher unterliegt starken zeitlichen Schwankungen, da beispielsweise der Energieverbrauch einer Wärmepumpe wesentlich von der Außentemperatur und der Energieverbrauch einer Ladestation von dem Verhalten des Nutzers eines Elektrofahrzeugs, insbesondere dessen Ladeverhalten, abhängig ist.

Auch die Erzeugung von erneuerbarer elektrischer Energie unterliegt starken witterungsbedingten Schwankungen, denn sie ist maßgeblich von dem Lichteinfall auf die jeweilige Photovoltaikanlage bzw. dem vorherrschenden Windverhältnissen abhängig.

Diese stark schwankende Energieerzeugung bzw. Energieabnahme hat erhebliche Nachteile für Netzbetreiber eines Energienetzes, beispielsweise eines Stromnetzes. Zur Erreichung von Netzstabilität muss dieser die Energieentnahme aus dem Netz und die Einspeisung von Energie in das Netz durch geeignete Maßnahmen derart ausgleichen, dass im Energienetz genügend Energie zur Verfügung steht. Aufgrund der Tatsache, dass dem Verbraucher gemäß dem abgeschlossenen Energielieferungsvertrag eine maximale Entnahmeleistung zugesichert ist und das Nutzerverhalten, d.h. wann der Nutzer Energie in welcher Höhe aus dem Netz abnimmt, bislang nicht oder nur sehr begrenzt beeinflussbar ist, muss ein Netzbetreiber dieses Nutzungsverhalten (sog. Standardlastprofil) und auch die Energieerzeugung durch regenerative Energiequellen prognostizieren und darauf basierend die Zuschaltung bzw. Abschaltung von steuerbaren Energiequellen vornehmen. So müssen beispielsweise an wind- und sonnenreichen Tagen Windkraftanlagen zeitweise stillgelegt werden, um einen Energieüberschuss im Stromnetz zu vermeiden. Dadurch entstehen hohe Kosten, da eine Ausfallvergütung zu zahlen ist.

Obwohl Standardlastprofile eine nützliche Methode zur Prognose des Energieverbrauchs sind, haben sie auch einige Einschränkungen, insbesondere im Kontext eines zunehmend dezentralisierten Energienetzes. Erstens basieren Standardlastprofile auf Durchschnittswerten und berücksichtigen nicht die individuellen Verhaltensweisen und Präferenzen der Verbraucher. In einem dezentralisierten Energienetz, in dem Verbraucher auch Produzenten (sogenannte "Prosumer") sein können, kann das Verbrauchsverhalten stark variieren. Ein Haushalt mit einer Photovoltaikanlage und einem Energiespeicher hat beispielsweise ein anderes Lastprofil als ein Haushalt ohne diese Technologien. Zweitens können Standardlastprofile schnelle Veränderungen im Energieverbrauch nicht genau vorhersagen. In einem dezentralisierten Netz können sich die Energieflüsse schnell ändern, beispielsweise wenn viele Verbraucher gleichzeitig ihre Elektroautos laden oder wenn die Energieerzeugung aus erneuerbaren Quellen plötzlich sinkt. Drittens können Standardlastprofile die Auswirkungen von Energieeffizienzmaßnahmen und neuen Technologien unterschätzen. Wenn viele Verbraucher beispielsweise auf energieeffiziente Geräte umsteigen oder intelligente Heimtechnologien einsetzen, kann der tatsächliche Energieverbrauch niedriger sein als vom Standardlastprofil vorhergesagt.

Um diese Herausforderungen zu bewältigen, arbeiten Netzbetreiber an der Entwicklung von flexibleren und genaueren Methoden zur Prognose des Energieverbrauchs, wie z.B. individuellen Lastprofilen und Echtzeit-Datenanalysen.

Ausgehend hiervon ist es Aufgabe der Erfindung, ein Verfahren sowie ein System zum Lastausgleich in einem Energieversorgungsnetz anzugeben, das es ermöglicht, gesteuert durch den Netzbetreiber ein netzdienliches Verhalten eines Netzteilnehmers zu bewirken und damit eine hohe Netzstabilität bei geringen Kosten zu erreichen.

Die Aufgabe wird durch ein Verfahren gemäß den Merkmalen des unabhängigen Patentanspruchs 1 gelöst. Bevorzugte Ausführungsformen sind Gegenstand der Unteransprüche. Ein System zum Lastausgleich in einem Energieversorgungsnetz ist Gegenstand des nebengeordneten Patentanspruchs 13.

Gemäß einem ersten Aspekt bezieht sich die Erfindung auf ein Verfahren zum Lastausgleich in einem Energieversorgungsnetz. Das Verfahren basiert auf einer rechnerbasierten Lastmanagement-Einheit, die mit mehreren Teilnehmern gekoppelt ist. Der Energieverbrauch der Teilnehmer wird durch Smart-Meter erfasst. Der Smart-Meter des Teilnehmers ist jeweils einem Smart-Meter-Gateway zugeordnet. Ein Teilnehmer kann eine natürliche Person, eine juristische Person oder aber ein technisches Gerät sein. Das Verfahren weist folgende Schritte auf:
Zunächst wird eine Lastausgleichsanfrage eines Netzbetreibers durch die Lastmanagement-Einheit empfangen. Die Lastausgleichsanfrage umfasst zumindest Informationen zu einem Lastausgleichszeitraum, in dem ein Lastausgleich erfolgen soll, und zu einem Lastausgleichsvolumen. Der Lastausgleichszeitraum definiert eine Zeitspanne, in dem der Lastausgleich erfolgen soll. Das Lastausgleichsvolumen gibt eine Energiemenge an, die auszugleichen ist, d.h. wie viel Energieüberschuss oder Energiedefizit nach einer Prognose im Lastausgleichszeitraum in dem Energienetz vorhanden ist. Das Energienetz kann beispielsweise ein Bereich eines Niederspannungsnetzes sein. Des Weiteren kann die Lastausgleichsanfrage Informationen über die Höhe der Vergütung des Lastausgleichs enthalten.

Basierend auf den Informationen, die in der Lastausgleichsanfrage enthalten sind, wird ein Angebot und ein angebotsspezifischer Smart-Contract erzeugt. Dieser angebotsspezifische Smart-Contract wird in einer Blockchain gespeichert. Der angebotsspezifische Smart-Contract enthält vorzugsweise Programmanweisungen, die zur Erstellung des Angebots und/oder der Abrechnung der Vergütung des Teilnehmers, der das Angebot angenommen hat, beitragen oder diese vollziehen. Insbesondere kann basierend auf dem angebotsspezifischen Smart-Contract eine teilnehmerbezogene Berechnung der Vergütung für dessen Beitrag zum Lastausgleich und eine Ausschüttung von Bilanzierungstoken basierend auf dem Ergebnis der Vergütungsberechnung erfolgen.

Anschließend erfolgt ein Versenden des Angebots an zumindest einen Teil der Teilnehmer durch die Lastmanagement-Einheit. Das Angebot enthält eine Lastveränderungsanfrage und Informationen zur Lastveränderungsvergütung. Die Lastveränderungsanfrage enthält vorzugsweise eine Angabe zu einem Zeitraum, innerhalb dem die Lastanpassung durch den Teilnehmer erfolgen soll. Der Zeitraum kann identisch zu dem Lastausgleichszeitraum sein, den der Netzbetreiber vorgegeben hat, oder sich auf einen Teilbereich dieses Lastausgleichszeitraum beschränken. Die Lastveränderungsanfrage enthält vorzugsweise auch eine Information, ob ein Mehr- oder Minderverbrauch gegenüber einer Verbrauchsreferenz (durchschnittlicher Energieverbrauch des Teilnehmers innerhalb des Zeitraums) gewünscht ist. Zudem kann das Angebot eine Information darüber enthalten, wie hoch der Betrag des Mehr- oder Minderverbrauchs an Energie durch den Teilnehmer sein soll. Die Lastveränderungsvergütung kann angeben, welche Vergütung der Teilnehmer für die Einsparung oder den Mehrverbrauch von Energie erhält. Die Lastveränderungsvergütung kann ein fester Betrag pro mehr oder minder verbrauchter Energie sein oder aber ein gestaffelter Betrag. Die Staffelung kann sich beispielsweise auf den Betrag der mehr oder minder verbrauchten Energie beziehen und/oder auf die Anzahl der Teilnehmer, die das Angebot annehmen.

Das Angebot kann zudem ein Gültigkeitsdatum aufweisen, d.h. angeben, in welchem Zeitraum der Teilnehmer das Angebot annehmen kann.

Anschließend erfolgt ein Annehmen des Angebots durch einen oder mehrere Teilnehmer. Das Annehmen des Angebots umfasst eine Lastveränderungszusage zumindest für einen Teil des Lastausgleichszeitraums. D.h. der Teilnehmer gibt mit der Angebotsannahme eine Zusage ab, dass er in einem festgelegten Zeitraum innerhalb des vom Netzbetreiber angefragten Lastausgleichszeitraums eine festgelegte Menge an Energie einspart oder mehr verbraucht. Das Annehmen des Angebots wird in einer Blockchain gespeichert. Die Blockchain kann dabei die gleiche Blockchain sein, in der der angebotsspezifische Smart-Contract gespeichert ist oder aber eine weitere, davon unabhängige Blockchain. Die Blockchain kann eine private oder eine öffentliche Blockchain sein.

Als weiterer Schritt wird eine Verbrauchsveränderungsinformation im Lastausgleichszeitraum berechnet, und zwar basierend auf dem Energieverbrauch des Teilnehmers in dem Lastausgleichszeitraum und einer Verbrauchsreferenzinformation des Teilnehmers. Die Verbrauchsreferenzinformation gibt an, welchen Energieverbrauch der Teilnehmer in einem zurückliegenden Vergleichszeitraum hatte. In anderen Worten dient die Verbrauchsreferenzinformation als Vergleichsgröße, basierend auf der der Mehr- oder Minderverbrauch an Energie des Teilnehmers ermittelt wird. Die Verbrauchsveränderungsinformation ist insbesondere die Differenz aus einem tatsächlichen Verbrauch des Teilnehmers und der Verbrauchsreferenzinformation.

Basierend auf der Verbrauchsveränderungsinformation wird die Anzahl von Bilanzierungstoken mittels des angebotsspezifischen Smart-Contracts berechnet. Die Bilanzierungstoken sind digitale Token, beispielsweise Krypto-Assets, die zwischen Wallets des Netzanbieters und des jeweiligen Teilnehmers verschoben werden können und basierend auf denen eine Vergütung des Teilnehmers, beispielsweise durch Umwandlung der Bilanzierungstoken in eine FIAT-Währung, erfolgen kann.

Zuletzt erfolgt das Zuweisen der Bilanzierungstoken zu einer Wallet des Teilnehmers.

Das erfindungsgemäße Verfahren bietet den entscheidenden Vorteil, dass es möglich ist, beim Erkennen eines notwendigen Lastausgleichs durch den Netzanbieter die Teilnehmer mittels eines konkreten Angebots dazu zu bewegen, in einem vom Netzbetreiber vorgegebenen Lastausgleichszeitraum den Verbrauch derart netzdienlich anzupassen, dass dadurch ein erwarteter Energieüberschuss oder Energiemangel im Netz verhindert oder zumindest reduziert wird. Dadurch können vorhandene regenerative Energiequellen besser ausgenutzt und das Auszahlen von Ausfallvergütung für abgeschaltete regenerative Energiequellen verhindert werden. Zudem können netzdienlich handelnde Teilnehmer vergütet, und damit deren Handlungen zum Lastausgleich im Energienetz entlohnt werden.

In Bezug auf nähere technische Ausgestaltungen des Smart-Meter-Gateways sei auf die technische Richtlinie des Bundesamts für Sicherheit in der Informationstechnik (BSI) TR-03109-1, Version 1.0 verwiesen, die vollumfänglich zum Gegenstand der vorliegenden Offenbarung gemacht wird.

Gemäß einem Ausführungsbeispiel bilden mehrere Smart-Meter-Gateways und/oder Rechnereinheiten, die mit den Smart-Meter-Gateways mittels einer CLS-Schnittstelle drahtgebunden gekoppelt sind, ein Smart-Meter-Gateway-Netzwerk. Die Smart-Meter Gateways sind vorzugsweise an unterschiedlichen Orten installiert. Ein Smart-Meter Gateway ist vorzugsweise an einer Einrichtung oder im engen örtlichen Bezug zu der Einrichtung installiert, die anderen Smart-Meter Gateways sind jedoch örtlich getrennt von dieser Einrichtung vorgesehen, beispielsweise an unterschiedlichen stromerzeugenden oder stromverbrauchenden Einrichtungen (z.B. Häusern, Kraftwerken, Photovoltaikanlagen, gewerblich genutzten Gebäuden etc.).

Gemäß einem Ausführungsbeispiel sind die Smart-Meter Gateways und/oder Rechnereinheiten des Smart-Meter-Gateway-Netzwerks durch eine kryptographisch gesicherte Netzwerkverbindung miteinander gekoppelt. Dadurch wird eine sichere Kommunikation zwischen den Smart-Meter Gateways und/oder Rechnereinheiten des Smart-Meter-Gateway-Netzwerks sichergestellt.

Das Smart-Meter-Gateway-Netzwerk kann zur Speicherung einer Blockchain verwendet werden. Zudem können Smart-Meter Gateways und/oder Rechnereinheiten des Smart-Meter-Gateway-Netzwerks Datenblöcke, die in die Blockchain einzubinden sind (d.h. ein Datenblock, der u.a. den Haschwert des in der Kette vorhergehenden Datenblocks enthält), berechnen. Gemäß einem Ausführungsbeispiel weist das Smart-Meter-Gateway-Netzwerk einen proof-of-stake-Konsensmechanismus zur Bestimmung, ob ein vorgeschlagener oder welcher der vorgeschlagenen Datenblöcke in die Kette von kryptographisch miteinander verknüpften Datensätzen eingebunden wird, auf. Ein proof-of-stake-Konsensmechanismus benötigt geringere Rechenressourcen zur Erzielung eines Konsenses als ein Proof-of-work-Konsensmechanismus. Da die Rechenleistung der Smart-Meter Gateways und/oder damit direkt verbundener Rechnereinheiten (sog. beispielsweise Hutschienenrechner) beschränkt ist, kann mittels eines proof-of-stake-Konsensmechanismus ein Konsens in geringerer Zeit erreicht werden. Alternativ können auch andere Konsensmechanismen verwendet werden, beispielsweise ein proof-of-work-Konsensmechanismus oder ein proof-of-authority-Konsensmechanismus.

Gemäß einem Ausführungsbeispiel bilden die Smart-Meter-Gateways zumindest von einigen der Teilnehmer oder Rechnereinheiten, die jeweils mit den Smart-Meter-Gateways zumindest von einigen der Teilnehmer direkt festverdrahtet über den CLS-Kanal (CLS: Controllable Local System) gekoppelt sind, jeweils einen Blockchain-Knoten in einem Smart-Meter-Gateway-Netzwerk. Zumindest einige Verfahrensinformationen werden in einer Blockchain in dem Smart-Meter-Gateway-Netzwerk gespeichert. Dies können beispielsweise die Verbrauchsveränderungsinformation und/oder die Verbrauchsreferenzinformation sein. Dadurch ist es möglich, dass Daten, die durch das Smart Meter bereitgestellt werden (beispielsweise Verbrauchsdaten oder davon abgeleitete Informationen) ohne die Notwendigkeit einer Datenübertragung über eine Drahtlosschnittstelle des Smart-Meter-Gateways in einer Blockchain gespeichert werden. Des Weiteren wird dadurch eine hohe Datensicherheit gewährleistet, weil ein Versenden der Daten über eine Kommunikationsverbindung zu externen Blockchainknoten, die außerhalb des Smart-Meter-Gateway-Netzwerks liegen, vermieden wird.

Gemäß einem Ausführungsbeispiel wird in dem Smart-Meter-Gateway oder einer mit dem Smart-Meter-Gateway direkt gekoppelten Rechnereinheit (d.h. in dem Smart-Meter-Gateway-Netzwerk) die Verbrauchsreferenzinformation des Teilnehmers basierend auf in der Vergangenheit aufgenommenen Energiemesswerten berechnet. Die Berechnung der Verbrauchsreferenzinformation kann kontinuierlich, quasikontinuierlich oder intermittierend erfolgen. Durch die Berechnung der Verbrauchsreferenzinformation in dem Smart-Meter-Gateway-Netzwerk ist es nicht nötig, die Energiemesswerte, die fortlaufend zur Berechnung der Verbrauchsreferenzinformation zu erfassen sind, an eine externe Rechnereinheit zu versenden, um die Verbrauchsreferenzinformation zu berechnen. Dadurch wird zum einen Datenvolumen an der Kommunikationsschnittstelle des Smart-Meter-Gateways eingespart, zum anderen wird aufgrund des nicht nötigen Versendens der Energiemesswerte nach außen die Datensicherheit erhöht.

Gemäß einem Ausführungsbeispiel wird in dem Smart-Meter-Gateway oder einer mit dem Smart-Meter-Gateway direkt gekoppelten Rechnereinheit (d.h. in dem Smart-Meter-Gateway-Netzwerk) die Verbrauchsveränderungsinformation des Teilnehmers berechnet. Durch die Berechnung der Verbrauchsveränderungsinformation in dem Smart-Meter-Gateway-Netzwerk ist es nicht nötig, die Energiemesswerte während des Lastausgleichszeitraum fortlaufend an eine externe Rechnereinheit zu versenden, um die Änderung des Energieverbrauchs des Teilnehmers relativ zu der Verbrauchsreferenzinformation zu berechnen. Dadurch wird zum einen Datenvolumen an der Kommunikationsschnittstelle des Smart-Meter-Gateways eingespart, zum anderen wird aufgrund des nicht nötigen Versendens der Energiemesswerte nach außen die Datensicherheit erhöht.

Gemäß einem Ausführungsbeispiel wird die Verbrauchsreferenzinformation und/oder Verbrauchsveränderungsinformation mittels eines Smart Contracts berechnet, der in einer Blockchain gespeichert ist. Die Blockchain ist in dem Smart-Meter-Gateway-Netzwerk gespeichert, d.h. auf den Smart-Meter-Gateways zumindest von einigen der Teilnehmer oder Rechnereinheiten, die jeweils mit den Smart-Meter-Gateways zumindest von einigen der Teilnehmer direkt gekoppelt sind. Durch die Verwendung eines Smart Contracts wird eine vertrauenswürdige und transparente Berechnung der Verbrauchsreferenzinformation und/oder Verbrauchsveränderungsinformation innerhalb des Smart-Meter-Gateway-Netzwerks gewährleistet.

Gemäß einem Ausführungsbeispiel wird basierend auf den in der Lastausgleichsanfrage enthaltenen Informationen eine Anzahl von Bilanzierungstoken erzeugt. Diese Bilanzierungstoken werden in einer dem Netzbetreiber zugeordneten Netzbetreiber-Wallet abgelegt. Dadurch ist es möglich, die von dem Netzbetreiber für netzdienliches Verhalten in Aussicht gestellte Vergütung mittels Bilanzierungstoken, die beispielsweise ein Krypto-Asset bilden, vorzuhalten und anschließend an die Wallets der Teilnehmer, die an dem angefragten Lastausgleich mitgewirkt haben, zu verteilen.

Gemäß einem Ausführungsbeispiel ist in einer Blockchain eine parametrisierte Smart-Contract-Vorlage gespeichert. Basierend auf der Smart-Contract-Vorlage und den Informationen, die in der Lastausgleichsanfrage des Netzbetreibers enthalten sind, wird der angebotsspezifische Smart-Contract erzeugt. Die Blockchain kann dabei eine in den Smart-Meter-Gateway-Netzwerk gespeicherte Blockchain (die insbesondere eine private Blockchain ist) sein oder aber auch in einem von dem Smart-Meter-Gateway-Netzwerk unabhängigen Rechnernetz gespeichert sein. Durch die parametrisierte Smart-Contract-Vorlage ist es möglich, auf einfache Weise auf Lastausgleichsanfragen des Netzanbieters zu reagieren und für die jeweilige Lastausgleichsanfrage einen spezifischen Smart-Contract zu generieren.

Gemäß einem Ausführungsbeispiel übermittelt die Lastmanagement-Einheit zwischen dem Versenden des Angebots und dem Ende des Zeitraums, in dem das Angebot angenommen werden kann, Informationen über den Stand der Angebotsannahme an den Netzbetreiber. Die Lastmanagement-Einheit ist ferner dazu ausgebildet, basierend auf einer Rückinformation des Netzbetreibers ein angepasstes Angebot und einen angepassten, angebotsspezifischen Smart-Contract zu erzeugen. Dadurch kann durch die Lastmanagement-Einheit abhängig von dem Grad der Angebotsannahme das Angebot derart nachbessern, dass das gewünschte Lastausgleichsvolumen erreicht wird.

Gemäß einem Ausführungsbeispiel vergleicht die Lastmanagement-Einheit nach dem Ende des Lastausgleichszeitraums die Lastveränderungszusage des Teilnehmers mit der Verbrauchsveränderungsinformation und erzeugt eine Bewertungsinformation für den Teilnehmer, die abhängig ist von der Abweichung der Verbrauchsveränderungsinformation von der Lastveränderungszusage. Dadurch ist es möglich, zu beurteilen, ob bzw. wie genau der Teilnehmer die Lastveränderungszusage erfüllt hat, d.h. die zugesagte Lastveränderung in dem Lastausgleichszeitraum auch tatsächlich vorgenommen hat. Abhängig von dem Beurteilungsergebnis kann der Teilnehmer bewertet werden. Das Ergebnis der Bewertung kann für die Einbindung des Teilnehmers in zukünftige Lastveränderungsanfragen herangezogen werden. Zudem ist es basierend auf der Abweichung der Verbrauchsveränderungsinformation von der Lastveränderungszusage möglich zu entscheiden, ob eine Gebühr aufgrund der Nichteinhaltung des zugesagten Lastausgleichs erhoben wird.

Gemäß einem Ausführungsbeispiel wird das Angebot an einen menschlichen Teilnehmer mittels einer Applikation auf einem mobilen Endgerät übermittelt. Damit kann der menschliche Teilnehmer direkt das Angebot prüfen. Die Annahme des Angebots erfolgt durch den Teilnehmer über die Applikation. Daran anschließend kann der Teilnehmer aufgrund des zugesagten Lastausgleichs in dem zugesagten Zeitraum einen Mehr- oder Minderverbrauch an Energie vornehmen. Alternativ ist es auch möglich, dass die Applikation eine Schnittstelle zu einem Energiemanagementsystem des Teilnehmers aufweist, und über diese Schnittstelle Informationen über den zugesagten Lastausgleich übermittelt werden. Damit kann durch das Zusammenwirken der Applikation mit dem Energiemanagementsystem eine automatisierte oder teilautomatisierte Lastanpassung der Verbraucher des Teilnehmers gemäß der Lastveränderungszusage erreicht werden.

Gemäß einem Ausführungsbeispiel erfolgt die Annahme des Angebots durch einen Smart Contract, der auf der Blockchain der Smart-Meter-Gateways oder der damit direkt verbundenen Rechnereinheit gespeichert ist. Damit ist eine automatisierte Angebotsannahme möglich.

Gemäß einem Ausführungsbeispiel ist der Teilnehmer ein technisches Gerät, beispielsweise ein Energiemanagementsystem eines Verbrauchers, eine Ladestation, eine Wärmepumpe etc. Das Gerät sendet an das Smart-Meter-Gateway oder eine damit direkt verbundene Rechnereinheit Informationen zu einem zukünftig möglichen Mehr- oder Minderverbrauch an Energie oder einer Energieeinspeisung in das Energienetz. Der Smart Contract, der in der Blockchain auf einem Smart-Meter-Gateway des Teilnehmers oder einer damit direkt verbundenen Rechnereinheit gespeichert ist, nimmt das Angebot eigenständig basierend auf diesen Informationen an. Dadurch kann ohne Einwirken eines menschlichen Teilnehmers ein netzdienlicher Beitrag zum Lastausgleich im Energienetz geleistet werden.

Gemäß einem weiteren Aspekt wird ein System zum Lastausgleich in einem Energieversorgungsnetz basierend auf einer rechnerbasierten Lastmanagement-Einheit und mehreren Teilnehmern offenbart. Das System weist einen Smart-Meter zum Erfassen des Energieverbrauchs eines Teilnehmers auf. Der Smart-Meter ist jeweils einem Smart-Meter-Gateway zugeordnet. Das System ist dazu ausgebildet, die folgenden Abläufe durchzuführen:
- Empfangen einer Lastausgleichsanfrage eines Netzbetreibers durch die Lastmanagement-Einheit, wobei die Lastausgleichsanfrage zumindest Informationen zu einem Lastausgleichszeitraum, in dem ein Lastausgleich erfolgen soll, und zu einem Lastausgleichsvolumen umfasst;
- Erzeugen eines Angebots und eines angebotsspezifischen, in einer Blockchain gespeicherten Smart-Contracts basierend auf den Informationen, die in der Lastausgleichsanfrage enthalten sind;

- Versenden des Angebots an zumindest einen Teil der Teilnehmer durch die Lastmanagement-Einheit, wobei das Angebot eine Lastveränderungsanfrage und Informationen zur Lastveränderungsvergütung enthält;
- Annehmen des Angebots durch einen oder mehrere Teilnehmer, wobei das Annehmen des Angebots eine Lastveränderungszusage zumindest für einen Teil des Lastausgleichszeitraums aufweist und wobei das Annehmen des Angebots in einer Blockchain gespeichert wird;
- Berechnen einer Verbrauchsveränderungsinformation im Lastausgleichszeitraum basierend auf dem Energieverbrauch des Teilnehmers in dem Lastausgleichszeitraum und einer Verbrauchsreferenzinformation des Teilnehmers;
- Berechnen der Anzahl von Bilanzierungstoken basierend auf der Verbrauchsveränderungsinformation mittels des angebotsspezifischen Smart-Contracts; und
- Zuweisen der Bilanzierungstoken zu einer Wallet des Teilnehmers.

Unter "Smart-Meter-Gateway-Netzwerk" im Sinne der vorliegenden Erfindung wird ein Netzwerk von Smart-Meter-Gateways und/oder mit Smart-Meter-Gateways mittels der CLS-Schnittstelle drahtgebunden gekoppelten Rechnereinheiten verstanden. Die Smart-Meter-Gateways und/oder die Rechnereinheiten sind vorzugsweise untereinander zum Datenaustausch mittels einer gesicherten Datenverbindung gekoppelt.

Unter "Smart-Contract" im Sinne der vorliegenden Erfindung wird ein Computerprotokoll oder eine durch einen Prozessor ausführbare Software verstanden, der/die einen Vertrag abbildet. Ein smart-contract bildet dabei die Logik vertraglicher Regelungen mit technischen Mitteln (insbesondere durch geeigneten ausführbaren Code) ab.

Unter "Speichern in einer Blockchain" kann eine Speicherung in einer öffentlichen oder privaten Blockchain, insbesondere einer privaten Blockchain, die in einem Smart-Meter-Gateway-Netzwerk gespeichert wird, verstanden werden.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft eine schematische Darstellung eines Smart Meter mit Smart-Meter-Gateway und einer damit gekoppelten Rechnereinheit;
- Fig. 2: beispielhaft eine schematische Darstellung eines Systems zum Lastausgleich in einem Energienetz; und
- Fig. 3: beispielhaft ein Ablaufdiagramm, das die Schritte eines Verfahrens zum Lastausgleich in einem Energienetz veranschaulicht.

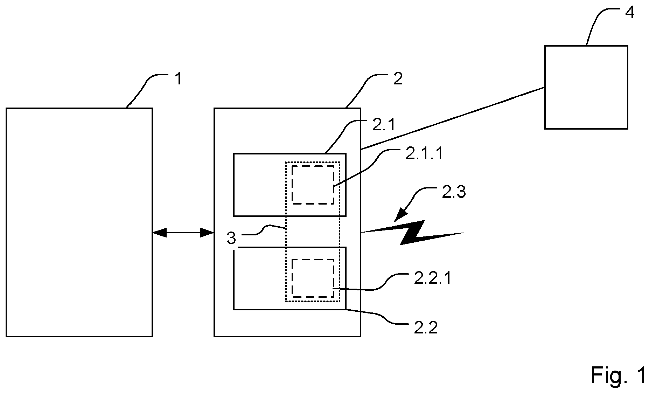

In Figur 1 ist beispielhaft und grob schematisch ein mit einem Smart Meter 1 als Messaufnehmer gekoppeltes Smart-Meter-Gateway 2 gezeigt, das Messdaten von dem Messaufnehmer 1, beispielsweise einem Stromzähler, empfängt, diese speichert und ggf. aufbereitet, um die Messdaten oder davon abgeleitete Informationen (beispielsweise durch eine Weiterverarbeitung der Messdaten) an einen Informationsempfänger weiterzuleiten. Derartige Informationsempfänger können beispielsweise eine Abrechnungsstelle, ein Versorgungsunternehmen etc. sein. Somit bildet das Smart-Meter-Gateway 2 ein Gateway für die Kommunikation des Smart-Meter 1 nach außen.

Das Smart-Meter-Gateway 2 ist vorzugsweise in unmittelbarer örtlicher Nähe zu dem Smart-Meter 1 angeordnet. Das Smart-Meter-Gateway 2 kann beispielsweise in einer Verbrauchsstelle, insbesondere einem Gebäude, vorgesehen sein, in dem sich auch der Smart-Meter 1 befindet. Alternativ kann der Smart-Meter 1 und das Smart-Meter-Gateway 2 einer energieerzeugenden oder einer energieverbrauchenden Anlage oder Gerät zugeordnet sein, um die von der Anlage erzeugte oder verbrauchte Energie zu bestimmen und Informationen darüber nach außen zu kommunizieren.

Das Smart-Meter-Gateway 2 weist zumindest einen Prozessor 2.1 zur Durchführung von Rechenoperationen und eine Speichereinheit 2.2 für die Abspeicherung von Daten auf.

Das Smart-Meter-Gateway 2 kann einen gekapselten Bereich 3 aufweisen, der in Figur 1 durch ein punktiert gezeichnetes Rechteck dargestellt ist. Dieser gekapselte Bereich 3 bildet eine sog. "sandbox", d.h. einen isolierten Bereich, so dass die Rechen- und Speicherprozesse in diesem gekapselten Bereich 3 keine Auswirkungen auf die übrigen Prozesse (beispielsweise Erfassung und Auswertung von Messdaten) haben, die außerhalb des gekapselten Bereichs 3 durch das Smart-Meter-Gateway 2 abgearbeitet werden.

Dem gekapselten Bereich 3 können insbesondere ein Prozessorbereich 2.1.1 des Prozessors 2.1 und ein Speicherbereich 2.2.1 der Speichereinheit 2.2 zugewiesen sein, so dass der gekapselte Bereich 3 grundsätzlich auf die gleiche Hardware zugreift, die auch für die übrigen in der Smart-Meter-Gateway 2 verarbeiteten Prozesse (beispielsweise Erfassung und Auswertung von Messdaten) verwendet werden. Jedoch wird eine virtuelle Trennung dadurch erreicht, dass dem gekapselten Bereich 3 beispielsweise ein anderer Prozessorbereich 2.1.1 (beispielsweise ein Prozessorkern eines Mehrkernprozessors) und ein anderer Speicherbereich 2.2.1 (andere Speicheradressen) zugewiesen sind als den übrigen in der Smart-Meter-Gateway 2 verarbeiteten Prozessen. In anderen Worten wird demnach eine virtuelle Kapselung für die Prozesse zur Transaktionsdurchführung erreicht.

Alternativ kann der gekapselte Bereich 3 einen eigenen Prozessor und eine eigene Speichereinheit aufweisen, auf die die übrigen in dem Smart-Meter-Gateway 2 verarbeiteten Prozesse (beispielsweise Erfassung und Auswertung von Messdaten) keinen Zugriff haben, so dass anstelle einer virtuellen Trennung eine physische Trennung erreicht wird.

Beispielsweise kann der gekapselte Bereich 3 als aufsteckbares Modul ausgebildet sein und mit dem Smart-Meter-Gateway 2 durch Aufstecken zum Austausch von Informationen gekoppelt sein. Der Austausch von Informationen über die Schnittstelle erfolgt bevorzugt verschlüsselt. Weiterhin vorzugsweise erfolgt der Austausch von Informationen über eine CLS-Schnittstelle (CLS: Controllable Local System). Durch das Aufstecken kann vorzugsweise auch die energetische Versorgung des Moduls sichergestellt werden. Vorzugsweise erfolgt auch eine Authentifizierung des aufsteckbaren Moduls gegenüber dem Smart-Meter-Gateway 2. Weiterhin vorzugsweise wird durch das Aufstecken auch die mechanische Fixierung des Moduls an dem Smart-Meter-Gateway 2 erreicht. Die Schnittstelle zur Versorgung des Moduls mit Informationen und Energie kann insbesondere durch eine länglich ausgebildete Kontaktleiste gebildet sein.

Alternativ oder zusätzlich kann eine Rechnereinheit 4 mit dem Smart-Meter-Gateway 2 gekoppelt sein. Die Rechnereinheit 4 ist vorzugsweise unmittelbar benachbart zum Smart-Meter-Gateway 2 vorgesehen. Der Datenaustausch zwischen der Rechnereinheit 4 und dem Smart-Meter-Gateway 2 erfolgt dabei vorzugsweise über eine direkte Datenverbindungsleitung. Vorzugsweise erfolgt der Datenaustausch drahtgebunden über die CLS-Schnittstelle des Smart-Meter-Gateway 2. Die Rechnereinheit 4 kann beispielsweise eine mit einer Hutschiene verbindbare Rechnereinheit sein (sog. DIN-Rail PC).

Der gekapselte Bereich 3 oder die Rechnereinheit 4 kann, abhängig von der Konfiguration des Smart-Meter-Gateways 2 auch Messdaten oder von Messdaten abgeleitete Informationen empfangen. Dies kann beispielsweise über einen internen Datenaustausch in dem Smart-Meter-Gateway 2 zwischen dem gekapselten Bereich 3 und einem vom gekapselten Bereich 3 virtuell oder physisch getrennten Bereich erfolgen. Ein direkter Zugriff auf Speicherbereiche, in denen die Messdaten oder von Messdaten abgeleitete Informationen gespeichert sind, ist aus dem gekapselten Bereich 3 heraus vorzugsweise nicht möglich.

Des Weiteren weist die das Smart-Meter-Gateway 2 eine Kommunikationsschnittstelle 2.3 auf, über die durch das Smart-Meter-Gateway 2 Daten versendet und empfangen werden können.

Das Smart-Meter-Gateway 2 oder die damit verbundene Rechnereinheit 4 sind dazu konfiguriert, einen oder mehrere Datensätze zu berechnen, die Informationen enthalten, basierend auf denen ein Lastmanagement eines Energienetzes möglich ist. Die Informationen können sich beispielsweise auf den Energieverbrauch eines Verbrauchers oder Teilnehmers über einen bestimmten Zeitraum, die Annahme von Angeboten zum Lastausgleich etc. beziehen. Ein Datensatz ist insbesondere ein Datenblock, der in eine Kette von Datensätzen eingebunden werden soll, und zwar derart, dass die Datensätze untereinander kryptographisch verkettet sind, um die Authentizität der Kette von Datensätzen zu gewährleisten. Der Datensatz ist damit insbesondere ein in eine Blockchain einzubindender Datenblock.

Ein Datensatz kann beispielsweise eine kryptographisch verschlüsselte Information eines in der Datensatz-Kette vorhergehenden, insbesondere unmittelbar vorherigen Datensatzes (beispielsweise einen Hashwert des gesamten Datensatzes oder eines Teils davon), die mit diesem Datensatz zu speichernden Informationen (z.B. für den Lastausgleich nötige Informationen) und vorzugsweise einen Zeitstempel aufweisen, der angibt, zu welchem Zeitpunkt der Datensatz generiert wurde.

Zur Erzeugung des Zeitstempels kann das Smart-Meter-Gateway 2 Zugriff auf eine Uhr haben. Dies kann insbesondere eine Atomuhr sein, so dass das Smart-Meter-Gateway 2 beispielsweise einen Zeitstempel basierend auf der Internationalen Atomzeit (TAI) generieren kann. Dadurch wird eine hochgenaue zeitliche Kennzeichnung der Datensätze ermöglicht.

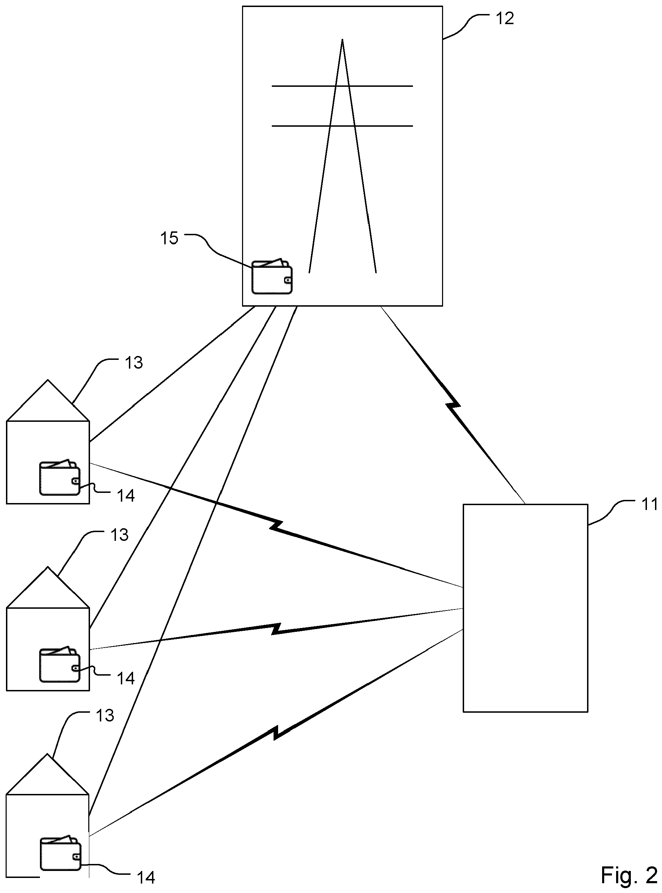

Fig. 2 veranschaulicht ein System 10, das zum Lastausgleich in einem Energieversorgungsnetz ausgebildet ist. Das Energieversorgungsnetz kann ein Stromnetz, insbesondere ein Niederspannungsnetz, oder ein Gasverteilnetz sein. Das System umfasst eine rechnerbasierte Lastmanagement-Einheit 11. Die Lastmanagement-Einheit 11 ist zum einen mit einem Netzbetreiber 12 über einen zumindest temporär bestehenden Kommunikationskanal verbunden. Des Weiteren ist die Lastmanagement-Einheit 11 jeweils mittels eines zumindest temporär bestehenden Kommunikationskanals mit mehreren Teilnehmern 13 verbunden. Ein Teilnehmer 13 kann eine natürliche Person, beispielsweise der Bewohner einer Wohnung oder eines Hauses oder aber auch ein technisches Gerät, beispielsweise eine Ladestation für ein elektrisch angetriebenes Fahrzeug oder ein Energiemanagmentsystem, sein. Den Teilnehmern 13 ist jeweils ein Smart-Meter 1 zugeordnet, das den Energieverbrauch (z.B. den Stromverbrauch oder Gasverbrauch) des jeweiligen Teilnehmers erfasst. Die Smart-Meter 1 sind jeweils einem Smart-Meter-Gateway 2 zugeordnet, das die Kommunikation des jeweiligen Smart Meter 1 nach außen gewährleistet.

Die Smart-Meter-Gateways 2 der Teilnehmer 13 oder die Rechnereinheiten 4, die mittels einer CLS-Schnittstelle drahtgebunden mit dem jeweiligen Smart-Meter-Gateway 2 des Teilnehmers 13 gekoppelt sind, bilden vorzugsweise Blockchain-Knoten. Das bedeutet, dass das jeweilige Smart-Meter-Gateway 2 oder die damit verbundene Rechnereinheit 4 eine Blockchain abspeichern und dazu konfiguriert sind, in die Blockchain einzubindende Datenblöcke zu berechnen (d.h. den Datenblock, der u.a. den Hashwert des in der Blockchain vorangehenden Datenblocks enthält).

Vorzugsweise bilden die Smart-Meter-Gateways 2 der Teilnehmer 13 oder die Rechnereinheiten 4, die mittels einer CLS-Schnittstelle drahtgebunden mit dem jeweiligen Smart-Meter-Gateway 2 des Teilnehmers 13 gekoppelt sind, ein Blockchainnetzwerk, und zwar derart, dass die Smart-Meter-Gateways 2 oder die damit gekoppelten Rechnereinheiten 4 der Teilnehmer 13 jeweils einen in die Blockchain einzubindenden Datenblock generieren und über einen Konsensmechanismus entschieden wird, welcher Datenblock der Vielzahl von generierten Datenblöcken in die Blockchain eingebunden wird.

Nachfolgend wird das System 10 und die Verfahrensabläufe zur Erzielung eines Lastausgleichs in einem Energienetz basierend auf den Figur 2 näher beschrieben.

Die Teilnehmer 13 werden von einem Netzbetreiber 12 mit Energie versorgt, wie dies durch die Linien in der Figur 2 dargestellt ist. "Energie" kann hierbei elektrische Energie aber auch ein Brennstoff, beispielsweise Erdgas, Wasserstoff, Biogas etc. sein.

Um die Netzstabilität des Energienetzes zu gewährleisten, muss der Netzbetreiber 12 eine Energieeinspeisung in das Energienetz vornehmen, die an den Energiebedarf der Verbraucher, die durch das Energienetz mit Energie versorgt werden, angepasst ist. Hierzu wird in einer Zukunftsprognose der Energieverbrauch durch den Netzbetreiber 12 geschätzt und abhängig von dieser Schätzung die Energie in das Energienetz eingespeist. Dies erfolgt bislang beispielsweise mittels des Zuschaltens bzw. Abschaltens von Kraftwerkskapazitäten.

Die vorliegende Erfindung schlägt abweichend hierzu vor, die Netzstabilität des Energienetzes über eine Plattform zu gewährleisten, mittels der Teilnehmer 13 für netzdienliches Handeln, d.h. Handlungen, die die Netzstabilität begünstigen, eine Vergütung erhalten können.

Die Lastmanagement-Einheit 11 kann über den zumindest temporär bestehenden ersten Kommunikationskanal Informationen mit dem Netzwerkbetreiber 12 austauschen. Insbesondere kann der Netzwerkbetreiber 12 über den Kommunikationskanal eine Lastausgleichanfrage an die Lastmanagement-Einheit 11 versenden. Mittels der Lastausgleichanfrage wird die Lastmanagement-Einheit 11 darüber informiert, dass seitens des Netzwerkbetreibers 12 der Bedarf für einen Lastausgleich besteht. Hierbei kann "Lastausgleich" bedeuten, dass in einem zukünftigen Zeitraum zu viel Energie oder zu wenig Energie im Energienetz vorhanden ist. Die Lastausgleichanfrage enthält Informationen zu dem Lastausgleichszeitraum, d.h. dem Zeitraum, in dem gemäß aktueller Planung ein Energieüberschuss oder ein Energiemangel im Energienetz besteht und Informationen über das Lastausgleichsvolumen, d.h. wieviel Last bzw. Energie in diesem Zeitraum auszugleichen ist. Zudem kann die Lastausgleichanfrage eine oder mehrere der folgenden Informationen enthalten:
- Informationen zur Vergütung eines Teilnehmers, der im Sinne des Lastausgleichs netzdienlich handelt;
- Informationen, in welchem Bereich des Energienetzes ein Lastausgleich zu erfolgen hat.

Die Lastmanagement-Einheit 11 empfängt die Lastausgleichanfrage des Netzwerkbetreibers 12. Die Lastmanagement-Einheit 11 ist vorzugsweise Teil einer Energieplattform, in der sich Teilnehmer 13, die netzdienlich handeln und dafür eine Vergütung erhalten möchten, anmelden können. Im Rahmen der werden neben Identifikationsdaten auch die örtliche Lage der Teilnehmer 13 im Energienetz erfasst.

Die Lastmanagement-Einheit 11 hat Zugriff auf Informationen von Teilnehmern 13, die beispielsweise aufgrund deren örtlicher Lage im Energienetz für eine bestimmte Lastausgleichsanfrage grundsätzlich in Frage kommen.

Nach dem Empfang einer Lastausgleichsanfrage durch die Lastmanagement-Einheit 11 wird durch die Lastmanagement-Einheit 11 ein Angebot an die Teilnehmer 13, die aufgrund deren örtlicher Lage im Energienetz zum angefragten Lastausgleich beitragen können, erstellt.

Dabei wird zunächst basierend auf den Informationen, die in der Lastausgleichsanfrage enthalten sind, ein angebotsspezifischer Smart-Contract erstellt, der in einer Blockchain gespeichert wird. Vorzugsweise werden auch die Lastausgleichsanfrage des Netzbetreiber 12 selbst sowie die darin enthaltenen Informationen in der Blockchain gespeichert. Die Blockchain, in der der angebotsspezifische Smart-Contract und ggf. auch die Lastausgleichsanfrage selbst gespeichert wird, kann dabei in einem Smart-Meter-Gateway-Netz gespeichert werden. Alternativ kann die Blockchain aber auch eine sonstige öffentliche oder private Blockchain sein.

Die Erstellung des angebotsspezifischen Smart-Contracts erfolgt vorzugsweise automatisiert oder zumindest teilautomatisiert mittels eines parametrisierten Smart-Contracts. Dieser parametrisierte Smart-Contract bildet ein Template, anhand dem der angebotsspezifische Smart-Contract erzeugbar ist. Mehr im Detail wird der parametrisierte Smart-Contract mit den in der Lastausgleichsanfrage enthaltenen Informationen aufgerufen. Der parametrisierte Smart-Contract generiert daraus den angebotsspezifischen Smart-Contract.

Des Weiteren erfolgt eine Versendung eines Angebots an einen oder mehrere Teilnehmer 13, die aufgrund deren örtlicher Lage im Energienetz zum angefragten Lastausgleich beitragen können.

In einer ersten Ausgestaltung kann das Angebot an einen Teilnehmer mittels einer Nachricht übermittelt werden. Diese Nachricht kann beispielsweise eine Push-Nachricht einer Applikation eines mobilen Endgeräts, eine Email, eine SMS (SMS: short message service) oder eine sonstige elektronische Nachricht sein. Die Nachricht informiert den Teilnehmer 13 über das Angebot. Insbesondere enthält das Angebot eine Lastveränderungsanfrage und eine Vergütungsinformation, wenn das Angebot angenommen wird und der Teilnehmer eine angefragte Lastveränderung vornimmt. Die Lastveränderungsanfrage enthält Informationen darüber, in welchem Zeitraum eine Lastveränderung stattfinden soll, ob sich das Angebot auf einen Mehrverbrauch oder Minderverbrauch an Energie bezieht und wie hoch die Vergütung für den Mehrverbrauch oder Minderverbrauch ist. Das Angebot kann beispielsweise wie folgt lauten: Wir vergüten morgen im Zeitraum von 11.00 Uhr bis 15.00 Uhr den Mehrverbrauch von Strom mit 10Cent pro kWh. Zudem enthält das Angebot vorzugsweise Informationen darüber, in welchem Zeitraum das Angebot gültig ist, d.h. der Teilnehmer 13 das Angebot annehmen kann.

Falls der Teilnehmer 13 ein technisches Gerät, beispielsweise eine Ladestation für ein elektrisch betriebenes Fahrzeug oder ein Energiemanagementsystem eines Hauses, ist, kann das Angebot über einen Datenaustausch direkt an das Gerät übermittelt werden.

Das Angebot selbst wird vorzugsweise in einer Blockchain gespeichert. Auch hier kann die Blockchain die in einem Smart-Meter-Gateway-Netz gespeicherte Blockchain sein oder aber eine sonstige öffentliche oder private Blockchain.

Nach dem Angebotsempfang kann das Angebot durch den jeweiligen Teilnehmer 13 angenommen werden. Dem Angebot kann ein Zeitraum zugeordnet sein, in dem das Angebot angenommen werden kann.

Mit der Angebotsannahme werden durch den Teilnehmer 13, insbesondere durch die Applikation des Teilnehmers 13, Annahmeinformationen an die Lastmanagement-Einheit 11 übermittelt. Diese Annahmeinformationen enthalten eine Lastveränderungszusage für den Lastausgleichszeitraum, d.h. die Lastveränderungszusage gibt an, welchen Mehr- oder Minderverbrauch von Energie (relativ zu einer Verbrauchsreferenzinformation) der Teilnehmer 13 im Lastausgleichszeitraum zusichert. So kann beispielsweise der Teilnehmer 13 einen Mehrverbrauch von 30kWh elektrischer Energie im Lastausgleichszeitraum zusichern, da er in dieser Zeit sein E-Auto auflädt (d.h. er tätigt eine Lastverschiebung in den Lastausgleichszeitraum). Das Annehmen des Angebots einschließlich der Lastveränderungszusage wird als Annahmeinformation in der Blockchain gespeichert. Auch hier kann die Blockchain die in einem Smart-Meter-Gateway-Netz gespeicherte Blockchain sein oder aber eine sonstige öffentliche oder private Blockchain.

Für den Fall, dass der Teilnehmer 13 ein technisches Gerät ist, kann das Gerät Informationen zu einem zukünftig möglichen Mehr- oder Minderverbrauch an Energie oder einer Energieeinspeisung in das Energienetz an das Smart-Meter-Gateway oder eine damit direkt verbundene Rechnereinheit senden. Der Smart Contract, der in der Blockchain auf einem Smart-Meter-Gateway des Teilnehmers oder einer damit direkt verbundenen Rechnereinheit gespeichert ist, kann das Angebot eigenständig, basierend auf diesen Informationen annehmen. Für eine derartige, eigenständige Annahme können beispielsweise vordefinierte Randbedingungen vorgesehen sein. Der Smart Contract kann derart konfiguriert sein, dass er bestimmte Randbedingungen vorsieht, die für ein akzeptierbares Angebot erfüllt sein müssen. Diese Randbedingungen können beispielsweise den Preis pro Kilowattstunde, die Gesamtmenge an Energie, die geliefert oder abgenommen werden soll, und den Zeitpunkt der Lieferung oder Abnahme umfassen.

Wenn ein Energieanbieter ein Angebot mit Angebotsparametern einreicht, die beispielsweise den Preis, die Menge und den Lieferzeitpunkt der Energie angeben, kann der Smart Contract das Angebot automatisch überprüfen. Dabei erfolgt beispielsweise ein Vergleich der Angebotsparameter mit den vordefinierten Randbedingungen.

Wenn die Angebotsparameter die vordefinierten Randbedingungen erfüllen, kann der Smart Contract das Angebot automatisch annehmen. Der Smart Contract würde beispielsweise die notwendigen Schritte einleiten, um die Energielieferung oder Energieabnahme zu arrangieren und die Zahlung zu verarbeiten. Wenn die Angebotsparameter außerhalb der vordefinierten Randbedingungen liegen, würde der Smart Contract das Angebot automatisch ablehnen.

Zudem werden durch die Lastmanagement-Einheit 11 die Lastveränderungszusagen der Teilnehmer gesammelt und die zugesagten Lastverschiebungen für den Lastausgleichszeitraum aufsummiert. Dadurch kann die Lastmanagement-Einheit 11 ermitteln, bis zu welchem Grad das vom Netzbetreiber 12 angefragte Lastausgleichsvolumen durch die Lastveränderungszusagen abgedeckt wurde.

Vorzugsweise ist die Lastmanagement-Einheit 11 dazu ausgebildet, abhängig vom Stand der Abdeckung des Lastausgleichsvolumens durch die Lastveränderungszusagen das Angebot nachzubessern. Insbesondere kann dann, wenn nach einem Verstreichen eines Teils des Zeitraums, in dem das Angebot gültig ist, die bisher eingegangenen Lastveränderungszusagen unzureichend sind, die Vergütung für den zugesagten Lastausgleich erhöht werden, um die Teilnehmer 13 zu einer verstärkten Angebotsannahme zu bewegen. Auch diese veränderten Angebote werden vorzugsweise in der Blockchain gespeichert.

Während des Lastausgleichszeitraums werden Verbrauchsveränderungsinformationen berechnet, und zwar jeweils für den Teilnehmer 13, der das Angebot angenommen hat und eine Lastveränderungszusage abgegeben hat.

Die Verbrauchsveränderungsinformationen werden vorzugsweise durch das Smart-Meter-Gateway 2, dem das Smart Meter 1 des jeweiligen Teilnehmers 13 zugeordnet ist, und/oder der Rechnereinheit 4, die jeweils mittels einer CLS-Schnittstelle drahtgebunden mit diesem Smart-Meter-Gateway 2 gekoppelt ist, berechnet.

Für die Berechnung werden zum einen Verbrauchsreferenzinformationen herangezogen. Die Verbrauchsreferenzinformationen geben den in der Vergangenheit liegenden Durchschnittsverbrauch des Teilnehmers in dem Lastausgleichszeitraum an. Die Verbrauchsreferenzinformationen können diskrete Energiewerte sein, die angeben, wieviel Energie der Teilnehmer 13 in einem Teilzeitraum des Lastausgleichszeitraums verbraucht hat (beispielsweise diskrete Werte im Minuten-, Viertel-Stunden- oder Stundentakt). Alternativ können die Verbrauchsreferenzinformationen durch eine Funktion oder einen Graphen zeitkontinuierlich bereitgestellt werden. Die Verbrauchsreferenzinformationen können beispielsweise Durchschnittswerte sein, die über einen Zeitraum von mehreren Wochen, beispielsweise 4 Wochen, gemittelt wurden.

Vorzugsweise erfolgt die Berechnung der Verbrauchsreferenzinformationen mittels kontinuierlich aufgenommener Energiemesswerte, so dass die Verbrauchsreferenzinformationen eine "dynamische" oder "schwebende" Basislinie (engl. floating baseline) bildet. Der Ablauf der Berechnung der Verbrauchsreferenzinformationen als Basislinie kann wie folgt vollzogen werden:
Zunächst erfolgt eine Datenerfassung: Ein Energiemessgerät, wie z.B. ein Smart Meter, erfasst kontinuierlich Daten über den Energieverbrauch. Diese Daten können in verschiedenen Intervallen erfasst werden, z.B. sekündlich, alle 10 Sekunden, je Minute, je viertel Stunde etc.

Anschließend erfolgt eine Datenaufbereitung. Dabei werden die erfassten Daten analysiert und ggf. modifiziert, um Rauschen und Ausreißer zu entfernen. Dies kann durch verschiedene Methoden erfolgen, wie z.B. Glättung, Mittelwertbildung oder Medianfilterung.

Basierend auf den aufbereiteten Daten erfolgt die Berechnung der "schwebenden" Basislinie. Diese Basislinie repräsentiert den "normalen" oder "erwarteten" Energieverbrauch des jeweiligen Teilnehmers. Die Methode zur Berechnung der Basislinie kann beispielsweise auf einem gleitenden Durchschnitt, einer exponentiellen Glättung oder einer Regression basieren.

Zuletzt kann eine Anpassung der Basislinie erfolgen. Die Basislinie wird beispielsweise kontinuierlich angepasst, um Veränderungen im Energieverbrauchsmuster des Teilnehmers zu berücksichtigen. Wenn beispielsweise der Energieverbrauch des Teilnehmers über einen längeren Zeitraum hinweg konstant höher oder niedriger ist als die Basislinie, kann die Basislinie entsprechend angepasst werden.
Die Verbrauchsreferenzinformationen werden vorzugsweise durch das Smart-Meter-Gateway 2, dem das Smart Meter 1 des jeweiligen Teilnehmers 13 zugeordnet ist, und/oder der Rechnereinheit 4, die jeweils mittels einer CLS-Schnittstelle drahtgebunden mit diesem Smart-Meter-Gateway 2 gekoppelt ist, berechnet. Vorzugsweise ist in der Blockchain, die in einem Smart-Meter-Gateway-Netzwerk gehostet ist, ein Smart-Contract zur Berechnung der Verbrauchsreferenzinformationen gespeichert. Dieser Smart-Contract empfängt Messwerte, die sich auf die vom Smart Meter 1 gemessene Leistung oder Energie beziehen, von dem Smart-Meter-Gateway 2 und berechnet daraus die Verbrauchsreferenzinformationen. Die Verbrauchsreferenzinformationen sind vorzugsweise gleitende Verbrauchsreferenzinformationen, d.h. die Verbrauchsreferenzinformationen werden fortlaufend abhängig vom Verbrauchsverhalten des Teilnehmers 13 geändert.

Des Weiteren erfolgt eine Berechnung des Energieverbrauchs des Teilnehmers 13 im Lastausgleichszeitraum, d.h. es wird ermittelt, wie hoch der aktuelle tatsächliche Energieverbrauch des Teilnehmers 13 während des Lastausgleichszeitraums war. Diese Berechnung kann durch das Smart-Meter-Gateway 2, oder die Rechnereinheit 4, die mittels der CLS-Schnittstelle drahtgebunden mit diesem Smart-Meter-Gateway 2 gekoppelt ist, erfolgen. Vorzugsweise erfolgt die Berechnung des Energieverbrauchs des Teilnehmers im Lastausgleichszeitraum ebenfalls mittels eines Smart Contracts, der in der Blockchain eines Smart-Meter-Gateway-Netzwerks gespeichert ist.

Aus der Verbrauchsreferenzinformation für den Lastausgleichszeitraum und dem berechneten Energieverbrauch des Teilnehmers 13 im Lastausgleichszeitraum kann die Verbrauchsänderungsinformation berechnet werden. Dies erfolgt vorzugsweise ebenfalls mittels eines Smart Contracts. Dieser Smart Contract ist vorzugsweise wiederum in der Blockchain gespeichert, die durch ein Smart-Meter-Gateway-Netzwerk gehostet wird.

Die Berechnung der Verbrauchsreferenzinformation, des tatsächlichen Energieverbrauchs im Lastausgleichszeitraum und die daraus resultierende Verbrauchsänderungsinformation in einem Smart Contract hat den technischen Vorteil, dass dadurch die Vertrauenswürdigkeit der Berechnung und damit der Berechnungsergebnisse sichergestellt werden kann.

Die Speicherung des Smart Contracts in einer Blockchain in einem Smart-Meter-Gateway-Netzwerk hat den Vorteil, dass die Daten, die zur Berechnung der Verbrauchsänderungsinformation notwendig sind, nicht durch das Smart-Meter-Gateway 2 an eine beispielweise über eine Mobilfunkverbindung angebundene Rechnereinheit übermittelt werden müssen, sondern die Berechnung direkt in dem Netzwerk von Smart-Meter-Gateways 2 bzw. damit verbundenen Rechnereinheiten 4 erfolgen kann. Dadurch wird zum einen Datenvolumen bei der Übertragung eingespart, zum anderen wird dadurch eine hohe Datensicherheit gewährleistet.

Basierend auf der berechneten Verbrauchsänderungsinformation erfolgt eine Abrechnung des Beitrags des Teilnehmers 13 zum Lastausgleich. Vorzugsweise erhält der Teilnehmer 13 für die netzdienliche Lastveränderung eine Vergütung, die gemäß Vergütungskriterien, die im Angebot spezifiziert sind, berechnet wird.

Wie in Fig. 2 gezeigt, ist dem Teilnehmer 13, insbesondere dem Smart Meter Gateway 2 des Teilnehmers 13, jeweils eine Wallet 14 zugeordnet.

Diese Wallet 14 wird beispielsweise für den jeweiligen Teilnehmer 13 erstellt, wenn sich dieser erstmals an der Lastmanagementeinheit 11 anmeldet.

Des Weiteren ist dem Netzbetreiber 12 eine Wallet 15 zugeordnet. In der Wallet 15 sind zunächst Bilanzierungstoken enthalten, die einen Wert haben, den der Netzbetreiber 12 insgesamt für netzdienliches Verhalten der Teilnehmer 13 im Zusammenhang mit der jeweiligen Lastausgleichsanfrage auszahlen möchte.

Entsprechend der berechneten Vergütung, die der jeweilige Teilnehmer für sein netzdienliches Verhalten erhält, werden Bilanzierungstoken von der Wallet 15 des Netzbetreibers 12 in die jeweilige Wallet 14 des Teilnehmers 13 übertragen. Die Berechnung der Anzahl der zu übertragenden Bilanzierungstoken erfolgt mittels des angebotsspezifischen Smart-Contracts. Die Bilanzierungstoken können beispielsweise einen Wert in einer Kryptowährung darstellen. Diese können anschließend in eine FIAT-Währung umgewandelt werden.

Vorzugsweise ist die Lastmanagement-Einheit 11 dazu ausgebildet, nach dem Ende des Lastausgleichszeitraums die Lastveränderungszusage, die der Teilnehmer 13 mit der Annahme des Angebots abgegeben hat, mit der Verbrauchsänderungsinformation, die die tatsächlich vollzogene Verbrauchsveränderung angibt, zu vergleichen. Dadurch kann ermittelt werden, ob der Teilnehmer die Lastveränderungszusage erfüllt hat oder nicht. Insbesondere kann auch der Grad der Abweichung der tatsächlichen Verbrauchsveränderung im Lastausgleichszeitraum von der Lastveränderungszusage bestimmt werden.

Basierend auf diesem Vergleich kann die Lastmanagement-Einheit 11 eine Bewertung des Teilnehmers 13 vornehmen. Diese Bewertung kann zukünftig dazu verwendet werden, ob der Teilnehmer 13 bei zukünftigen Lastausgleichsanfragen des Netzbetreibers 12 wieder berücksichtigt wird. Darüber hinaus kann auch die Höhe der Vergütung für eine Verbrauchsveränderung bei einer zukünftigen Annahme eines Angebots für eine Lastveränderung abhängig von der Bewertung des Teilnehmers 13 angepasst werden. So kann ein Teilnehmer 13, der die Lastveränderungszusage einhält oder nur geringfügig davon abweicht, zukünftig höher vergütet werden als ein Teilnehmer 13, der seine Lastveränderungszusage nicht oder nur teilweise einhält.

Zudem kann bei einer Nichterfüllung der Lastveränderungszusage eine Sanktionierung des Teilnehmers 13 vorgenommen werden, beispielsweise in Form einer Gebühr, eines Ausschlusses aus dem System 10 etc.

Gemäß einem Ausführungsbeispiel sind dem Smart-Meter-Gateway 2 eines Teilnehmer 13 eine Vielzahl von Identitäten zugeordnet, die untereinander durch Identitätsbeziehungen verknüpft sind. Die Identitätsbeziehungen geben beispielsweise an, dass und/oder wie die Vielzahl von Identitäten untereinander in Verbindung stehen. Die Vielzahl von Identitäten kann beispielsweise über eine baumartige Identitätsstruktur miteinander in Verbindung stehen. Eine Identität kann beispielsweise ein definierter Verbraucher (z.B. Wallbox, Wärmepumpe etc.) des Teilnehmers 13 sein. Dadurch ist über die Identitätsbeziehungen beispielsweise eindeutig eine Identitätshierarchie definiert und es kann ein Verbrauch, der von einer definierten Identität (z.B. Wallbox, Wärmepumpe etc.) verursacht wird, direkt dem Teilnehmer 13 zugeordnet werden.

Einem Smart-Meter-Gateway können beispielsweise verschiedene Identitäten zugeordnet werden, die verschiedene Objekte, Geräte oder Personen darstellen, die mit dem Energieverbrauch und der Energieerzeugung in Verbindung stehen. Diese Identitäten sind durch Identitätsbeziehungen miteinander verknüpft, die angeben, wie die Identitäten untereinander in Verbindung stehen. Sie können beispielsweise in einer baumartigen Struktur organisiert sein, die die Hierarchie und Beziehungen zwischen den verschiedenen Identitäten darstellt.

Gemäß einem Ausführungsbeispiel sind die Identitäten und deren Identitätsbeziehungen zueinander in einer Kette von kryptographisch miteinander verknüpften Datensätzen (d.h. in einer Blockchain) in dem Smart-Meter-Gateway-Netzwerk gespeichert. Insbesondere sind die Identitäten und deren Identitätsbeziehungen zueinander in zumindest einem Smart-Contract spezifiziert, wobei dieser zumindest eine Smart-Contract in einer Kette von kryptographisch miteinander verknüpften Datensätzen (d.h. in einer Blockchain) in einem Rechnernetzwerk gespeichert ist. Dadurch ist sichergestellt, dass die Identitäten und deren Beziehungen untereinander sicher und nicht kompromittierbar gespeichert sind.

Gemäß einem Ausführungsbeispiel ist der zumindest einen Identität, insbesondere den mehreren Identitäten eines Identitätsbaums, jeweils ein kryptographischer Schlüssel (jeder Identität ein anderer Schlüssel) zugeordnet. Der kryptographische Schlüssel kann beispielsweise ein Schlüsselpaar eines asymmetrischen Verschlüsselungsverfahrens sein, d.h. einen öffentlichen und einen privaten Schlüssel umfassen. Das Abspeichern von Informationen, die von der jeweiligen Identität herrühren (beispielsweise Verbrauchsinformationen), kann dadurch unter Bezugnahme auf diese Identität durch ein Verschlüsseln der abzuspeichernden Prozessinformation basierend auf dem kryptographischen Schlüssel der Identität erfolgen. Vorzugsweise wird die Identität durch den kryptographischen Schlüssel eindeutig definiert, so dass durch das Verschlüsseln der Informationen mit dem kryptographischen Schlüssel gleichzeitig eine Zuordnung der abzuspeichernden Informationen zu der Identität erfolgt.

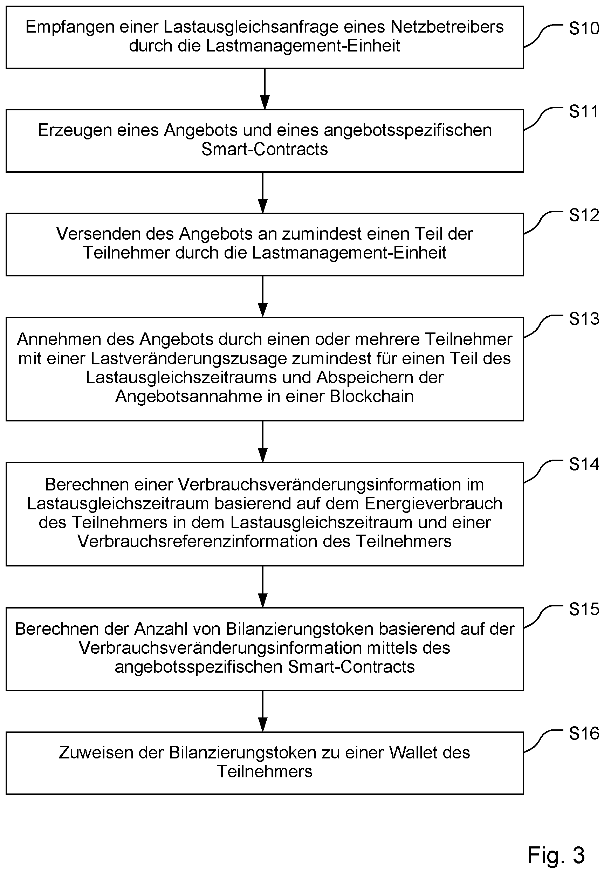

Fig. 3 zeigt schematisch die Verfahrensschritte eines Verfahrens zum Lastausgleich in einem Energieversorgungsnetz basierend auf einer rechnerbasierten Lastmanagement-Einheit.

Zunächst wird eine Lastausgleichsanfrage eines Netzbetreibers durch die Lastmanagement-Einheit empfangen (S10). Die Lastausgleichsanfrage umfasst dabei zumindest Informationen zu einem Lastausgleichszeitraum, in dem ein Lastausgleich erfolgen soll, und zu einem Lastausgleichsvolumen. Vorzugsweise umfasst die Lastausgleichsanfrage auch Informationen zur Vergütung des Lastausgleichs.

Anschließend wird ein Angebot und ein angebotsspezifischer, in einer Blockchain gespeicherter Smart-Contract erzeugt (S11). Das Angebot und der angebotsspezifische Smart-Contract basiert auf den Informationen, die in der Lastausgleichsanfrage enthalten sind.

Daraufhin wird das Angebot an zumindest einen Teil der Teilnehmer durch die Lastmanagement-Einheit versandt (S12). Das Angebot enthält eine Lastveränderungsanfrage und Informationen zur Lastveränderungsvergütung.

Anschließend erfolgt das Annehmen des Angebots durch einen oder mehrere Teilnehmer (S13). Das Annehmen des Angebots umfasst eine Lastveränderungszusage zumindest für einen Teil des Lastausgleichszeitraums. Das Annehmen des Angebots wird in einer Blockchain gespeichert.

Um den Beitrag des Teilnehmers an dem Lastausgleich zu bestimmen, wird eine Verbrauchsveränderungsinformation im Lastausgleichszeitraum basierend auf dem Energieverbrauch des Teilnehmers in dem Lastausgleichszeitraum und einer Verbrauchsreferenzinformation des Teilnehmers berechnet (S14);.

Basierend auf der Verbrauchsveränderungsinformation wird eine Anzahl von Bilanzierungstoken mittels des angebotsspezifischen Smart-Contracts berechnet (S15).

Zuletzt werden die Bilanzierungstoken zu einer Wallet des Teilnehmers zugewiesen (S16).

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegend Erfindungsgedanke verlassen wird.

### Bezugszeichenliste

- 1: Smart-Meter
- 2: Smart-Meter-Gateway
- 2.1: Prozessor
- 2.1.1: Prozessorbereich
- 2.2: Speichereinheit
- 2.2.1: Speicherbereich
- 2.3: Kommunikationsschnittstelle
- 3: gekapselter Bereich
- 4: Rechnereinheit

- 10: System
- 11: Lastmanagement-Einheit
- 12: Netzbetreiber
- 13: Teilnehmer
- 14: Wallet
- 15: Wallet

## Patentansprüche

1. Computerbasiertes Verfahren zum Lastausgleich in einem Energieversorgungsnetz basierend auf einer rechnerbasierten Lastmanagement-Einheit (11) und mehreren Teilnehmern (13), wobei der Energieverbrauch der Teilnehmer (13) mittels Smart-Meter (1) erfasst wird und ein oder mehrere Smart-Meter (1) jeweils einem Smart-Meter-Gateway (2) zugeordnet sind, wobei das Verfahren folgende Schritte aufweist:
- Empfangen einer Lastausgleichsanfrage eines Netzbetreibers (12) durch die Lastmanagement-Einheit (11), wobei die Lastausgleichsanfrage zumindest Informationen zu einem Lastausgleichszeitraum, in dem ein Lastausgleich erfolgen soll, und zu einem Lastausgleichsvolumen umfasst (S10);
- Erzeugen eines Angebots und eines angebotsspezifischen, in einer Blockchain gespeicherten Smart-Contracts basierend auf den Informationen, die in der Lastausgleichsanfrage enthalten sind (S11);
- Versenden des Angebots an zumindest einen Teil der Teilnehmer (13) durch die Lastmanagement-Einheit (11), wobei das Angebot eine Lastveränderungsanfrage und Informationen zur Lastveränderungsvergütung enthält (S12);
- Annehmen des Angebots durch einen oder mehrere Teilnehmer (13), wobei das Annehmen des Angebots eine Lastveränderungszusage zumindest für einen Teil des Lastausgleichszeitraums aufweist und wobei das Annehmen des Angebots in einer Blockchain gespeichert wird (S13);
- Berechnen einer Verbrauchsveränderungsinformation im Lastausgleichszeitraum basierend auf dem Energieverbrauch des Teilnehmers (13) in dem Lastausgleichszeitraum und einer Verbrauchsreferenzinformation des Teilnehmers (13) (S14);
- Berechnen der Anzahl von Bilanzierungstoken basierend auf der Verbrauchsveränderungsinformation mittels des angebotsspezifischen Smart-Contracts (S15); und
- Zuweisen der Bilanzierungstoken zu einer Wallet (14) des Teilnehmers (13) (S16).

2. Verfahren nach Anspruch 1, **dadurch gekennzeichnet, dass** die Smart-Meter-Gateways (2) zumindest von einigen der Teilnehmer (13) oder Rechnereinheiten (4), die jeweils mit den Smart-Meter-Gateways (2) zumindest von einigen der Teilnehmer (4) direkt gekoppelt sind, jeweils einen Blockchain-Knoten in einem Smart-Meter-Gateway-Netzwerk bilden und dass zumindest einige Verfahrensinformationen in einer Blockchain in dem Smart-Meter-Gateway-Netzwerk gespeichert werden.

3. Verfahren nach Anspruch 1 oder 2, **dadurch gekennzeichnet, dass** in dem Smart-Meter-Gateway (2) oder einer mit dem Smart-Meter-Gateway direkt gekoppelten Rechnereinheit (4) die Verbrauchsreferenzinformation des Teilnehmers (13) basierend auf in der Vergangenheit aufgenommenen Energiemesswerten berechnet wird.

4. Verfahren nach einem der vorhergehenden Ansprüche, **dadurch gekennzeichnet, dass** in dem Smart-Meter-Gateway (2) oder einer mit dem Smart-Meter-Gateway (2) direkt gekoppelten Rechnereinheit (4) die Verbrauchsveränderungsinformation des Teilnehmers (13) berechnet wird.

5. Verfahren nach einem der Ansprüche 3 oder 4, **dadurch gekennzeichnet, dass** mittels eines Smart Contracts, der in einer Blockchain, die auf den Smart-Meter-Gateways (2) zumindest von einigen der Teilnehmer (13) oder Rechnereinheiten (4), die jeweils mit den Smart-Meter-Gateways zumindest von einigen der Teilnehmer direkt gekoppelt sind, gespeichert ist, die Verbrauchsreferenzinformation und/oder die Verbrauchsveränderungsinformation berechnet wird.

6. Verfahren nach einem der vorhergehenden Ansprüche, **dadurch gekennzeichnet, dass** basierend auf den in der Lastausgleichsanfrage enthaltenen Informationen eine Anzahl von Bilanzierungstoken erzeugt wird und diese in einer dem Netzbetreiber (14) zugeordneten Netzbetreiber-Wallet (15) abgelegt werden.

7. Verfahren nach einem der vorhergehenden Ansprüche, **dadurch gekennzeichnet, dass** in einer Blockchain eine parametrisierte Smart-Contract-Vorlage gespeichert ist und dass basierend auf der Smart-Contract-Vorlage und den Informationen, die in der Lastausgleichsanfrage des Netzbetreibers (14) enthalten sind, der angebotsspezifische Smart-Contract erzeugt wird.

8. Verfahren nach einem der vorhergehenden Ansprüche, **dadurch gekennzeichnet, dass** die Lastmanagement-Einheit (11) zwischen dem Versenden des Angebots und dem Ende des Zeitraums, in dem das Angebot angenommen werden kann, Informationen über den Stand der Angebotsannahme an den Netzbetreiber (14) übermittelt und dass die Lastmanagement-Einheit dazu ausgebildet ist, basierend auf einer Rückinformation des Netzbetreibers (14) ein angepasstes Angebot und einen angepassten, angebotsspezifischen Smart-Contract zu erzeugen.

9. Verfahren nach einem der vorhergehenden Ansprüche, **dadurch gekennzeichnet, dass** die Lastmanagement-Einheit (11) nach dem Ende des Lastausgleichszeitraums die Lastveränderungszusage eines Teilnehmers (13) mit dessen Verbrauchsveränderungsinformation vergleicht und eine Bewertungsinformation für den Teilnehmer (13) erzeugt, die abhängig ist von der Abweichung der Verbrauchsveränderungsinformation von der Lastveränderungszusage.

10. Verfahren nach einem der vorhergehenden Ansprüche, **dadurch gekennzeichnet, dass** das Angebot an einen menschlichen Teilnehmer mittels einer Applikation auf einem mobilen Endgerät übermittelt wird und die Annahme des Angebots von dem Teilnehmer über die Applikation erfolgt.

11. Verfahren nach einem der Ansprüche 2 bis 9, **dadurch gekennzeichnet, dass** die Annahme des Angebots durch einen Smart Contract erfolgt, der auf der Blockchain im Smart-Meter-Gateway-Netzwerk gespeichert ist.

12. Verfahren nach Anspruch 11, **dadurch gekennzeichnet, dass** der Teilnehmer (13) ein technisches Gerät ist, dass das Gerät an das Smart-Meter-Gateway-Netzwerk Informationen zu einem zukünftig möglichen Mehr- oder Minderverbrauch an Energie oder eine Energieeinspeisung in das Energienetz versendet und der Smart Contract, der in der Blockchain in dem Smart-Meter-Gateway-Netzwerk gespeichert ist, das Angebot basierend auf diesen Informationen annimmt.

13. System zum Lastausgleich in einem Energieversorgungsnetz basierend auf einer rechnerbasierten Lastmanagement-Einheit (11) und mehreren Teilnehmern (13), wobei Smart-Meter (1) zum Erfassen des Energieverbrauchs der Teilnehmer (13) vorgesehen sind und wobei das System (10) mehrere Smart-Meter-Gateways (2) aufweist, wobei ein oder mehrere Smart-Meter (1) einem Smart-Meter-Gateway (2) zugeordnet sind, wobei das System (10) dazu ausgebildet ist, die folgenden Abläufe durchzuführen:
- Empfangen einer Lastausgleichsanfrage eines Netzbetreibers (12) durch die Lastmanagement-Einheit (11), wobei die Lastausgleichsanfrage zumindest Informationen zu einem Lastausgleichszeitraum, in dem ein Lastausgleich erfolgen soll, und zu einem Lastausgleichsvolumen umfasst;
- Erzeugen eines Angebots und eines angebotsspezifischen, in einer Blockchain gespeicherten Smart-Contracts basierend auf den Informationen, die in der Lastausgleichsanfrage enthalten sind;
- Versenden des Angebots an zumindest einen Teil der Teilnehmer (13) durch die Lastmanagement-Einheit (11), wobei das Angebot eine Lastveränderungsanfrage und Informationen zur Lastveränderungsvergütung enthält;
- Annehmen des Angebots durch einen oder mehrere Teilnehmer (13), wobei das Annehmen des Angebots eine Lastveränderungszusage zumindest für einen Teil des Lastausgleichszeitraums aufweist und wobei das Annehmen des Angebots in einer Blockchain gespeichert wird;
- Berechnen einer Verbrauchsveränderungsinformation im Lastausgleichszeitraum basierend auf dem Energieverbrauch des Teilnehmers (13) in dem Lastausgleichszeitraum und einer Verbrauchsreferenzinformation des Teilnehmers (13);
- Berechnen der Anzahl von Bilanzierungstoken basierend auf der Verbrauchsveränderungsinformation mittels des angebotsspezifischen Smart-Contracts; und
- Zuweisen der Bilanzierungstoken zu einer Wallet (14) des Teilnehmers (13).
